# EUROPEAN PATENT APPLICATION

(11) **EP 2 236 360 A1**
(43) Date of publication of application: **06.10.2010**
(21) Application number: 09705252.6
(22) Date of filing: 23.01.2009
(51) Int. Cl.: B60R 16/02, H01B 7/00, H01B 7/24

(54) **WIRE HARNESS FOR AUTOMOBILE**

(30) Priority: 29.01.2008 JP 2008018318
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: MURAYAMA, Shigeki, Yokkaichi-shi Mie 510-8503 (JP); KOSEKI, Hirokazu, Yokkaichi-shi Mie 510-8503 (JP)
(74) Representative: Winter, Brandl, Fürniss, Hübner, Röss, Kaiser, Polte - Partnerschaft
(86) International application number: PCT/JP2009/051043
(87) International publication number: WO 2009/096324

(57) **Abstract**

Disclosed is a wire harness for an automobile, which facilitates rounting in all routing areas of one wire harness being routed in an automobile while saving the space for the routing areas, and sustains high durability of the wire harness. A flat portion which holds a plurality of round wires arranged in parallel in a flat shape by means of a jacket material, and a circular portion which holds the plurality of round wires, that have been converged to have a circular section, to have a circular section by means of the jacket material are provided continuously while being located in different areas along the length direction of the wire harness. The flat portion is provided in an area corresponding to any one of the moving area, the curved area, the cross routing area between the body portions, or the routing area to a flat space of the wire harness when the wire harness is routed in the automobile, and the circular portion is provided in an area corresponding to any one of the roating area about the axis, the twisted routing area, or an area other than the flat portion of the wire harness when the wire harness is routed in the automobile.

## Description

### TECHNICAL FIELD

The present invention relates to a wire harness for a car. More particularly the present invention is intended to save a wire harness-wiring space and easily wire the wire harness so that the durability of the wire harness is improved.

### BACKGROUND ART

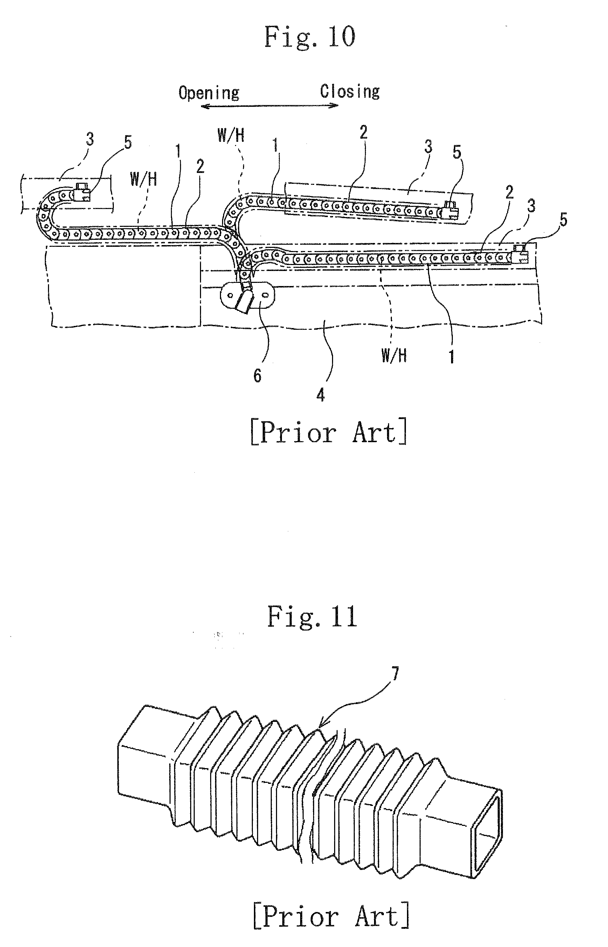

To provide various electric parts with electricity, a large number of wire harnesses are wired in various regions of a car body. For example, to always provide electric parts disposed inside a slide door of the car with electricity, the wire harness is cross-wired between the slide door and a car body. As shown in Fig. 10, as a wiring construction of this kind, there is proposed a construction in which a wire harness W/H is inserted into a caterpillar-shaped cable guide 2 where a plurality of link members 1 is linearly connected to each other and the cable guide 2 is cross-wired between a slide door 3 and a car body 4 in the shape of S (see Japanese Patent Applications Laid-Open No. 2004-25999).

By inserting the wire harness W/H composed of a plurality of electric wires bundled sectionally circularly into the caterpillar-shaped cable guide 2, it is possible to prevent the wire harness W/H from hanging, although the wire harness W/H is hitherto liable to hang and take a clearance between the slide door 3 and the car body 4 by controlling the curving of the wire harness W/H which follows the operation of opening and closing the slide door 3. Therefore by preventing the wire harness W/H and peripheral members from interfering with each other, the durability of the wire harness W/H can be enhanced. It is possible to wire the wire harness W/H, having the above-described construction, which has been inserted into the cable guide 2 and the slide door-side supporting member 5 and the car body-side supporting member 6 from both ends of the cable guide 2 flexibly and easily in a necessary posture in the wiring region to the slide door 3 and the car body 4.

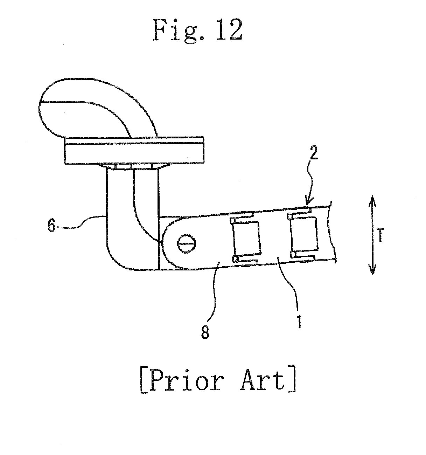

But the caterpillar-shaped cable guide 2 is expensive and in addition the wire harness W/H inserted into the cable guide 2 is exposed to the outside from the gaps between the link members 1. Therefore it is necessary to prevent the exposure of the wire harness W/H by sheathing the cable guide 2 to a higher extent with the tube 7 shown in Fig. 11. Thus the above-described wiring construction has a problem that it requires a large wiring space and an increased number of parts and operation steps and hence the cost becomes high. Some types of the slide doors 3 operate at varied angles in a vertical direction perpendicular to the sliding direction. To cope with the vertical movement, it is necessary to provide a vertically movable mechanism as shown in Fig. 12 (Japanese Patent Applications Laid-Open No. 2004-40862). That is, it is necessary to provide the connection member 8 supported vertically (direction shown with arrow T) rotatably between the supporting member 6 fixed to the car body 4 and one end of the cable guide 2. Thereby the number of parts increases and the construction becomes complicated.

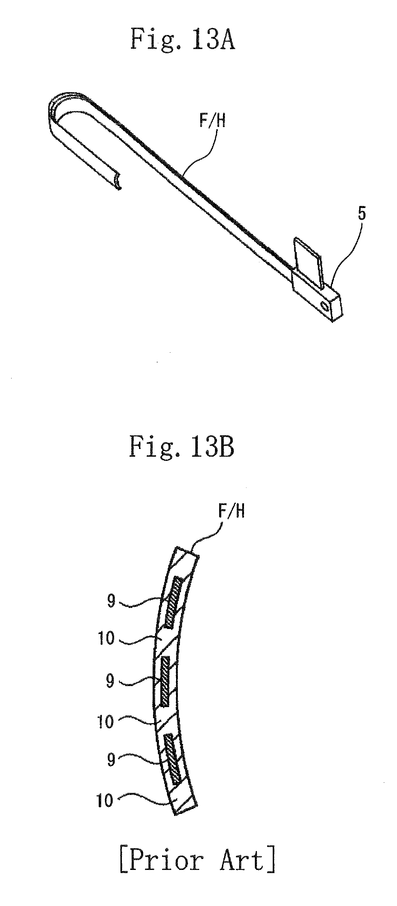

As shown in Figs. 13(A) and 13(B), there is proposed a construction in which a plurality of the laminated flat harnesses F/H composed of the flexible flat cable (FFC) formed by laminating the plastic films 10 on both surfaces of a plurality of the flat conductors 9 is cross-wired between the slide door 3 and the car body 4 by laying a plurality of the flat harnesses F/H one upon another (Japanese Patent Applications Laid-Open No. 2006-306267).
The above-described construction is effective for the cross-wiring region because by spanning the flat harness F/H between the slide door 3 and the car body 4, the flat harness F/H is capable of following the operation of opening and closing the slide door 3 with the flat harness F/H having a high linearity smoothly curving at a small radius of curvature, prevent the flat harness F/H and the peripheral members from interfering with each other, save the space of the wiring region, and it is unnecessary to provide a complicated construction like the cable guide 2.

But it is difficult to wire the flat harness F/H which has been cross-wired between the slide door 3 and the car body 4 and inserted into the slide door-side supporting member 5 and the car body-side supporting member 6 inside the slide door 3 and the car body 4 in a three-dimensional posture when the flat harness F/H has an as-produced state. Therefore it is necessary to wire the flat harness F/H inside the slide door 3 and the car body 4 after the flat harness F/H is bent or the like. Thereby the number of operation steps and the wiring space increase. In addition there is a possibility that the durability of the flat harness F/H deteriorates owing to bending or the like.

As apparent from the foregoing description, there is room for improvement in the above-described construction in facilitating the wiring of the wire harness W/H in all wiring regions of one wire harness W/H to be wired in the car body, saving the space of the wiring region, and maintaining the durability of the wire harness W/H to a high extent.

Patent document 1: Japanese Patent Applications Laid-Open No. 2004-25999
Patent document 2: Japanese Patent Applications Laid-Open No. 2004-40862
Patent document 3: Japanese Patent Applications Laid-Open No. 2006-306267

### DISCLOSURE OF THE INVENTION

### PROBLEM TO BE SOLVED BY THE INVENTION

The present invention has been made in view of the above-described problem. It is an object of the present invention to allow a wire harness which is to be continuously wired in a car body to be easily wired in all of wiring regions, save the space of the wiring regions, and maintain the durability of the wire harness to a high extent.

### MEANS FOR SOLVING THE PROBLEM

A wire harness for a car composed of a plurality of bundled round electric wires each having an insulation covering layer disposed on a periphery of a core wire, the wire harness comprising:
a flat part holding a plurality of the round electric wires arranged in parallel by a sheathing material in a flat configuration; and
a circular part sectionally circularly holding a plurality of the sectionally circularly bundled round electric wires by a sheathing material with the flat part and the circular part being located in different regions along a longitudinal direction of the wire harness and continuous with each other,
   wherein in wiring the wire harness in the car, the flat part is disposed in any one of regions corresponding to a moving region of the wire harness, a curved region thereof, a cross-wiring region thereof where the wire harness is cross-wired in the car, and a wiring region where the wire harness is wired to a flat space; and
   in wiring the wire harness in the car, the circular part is disposed in a region corresponding to any one of a rotating region around an axis of the wire harness, a twisted wiring region, and other regions except the regions where the flat part is disposed.

The region where the wire harness is continuously wired includes the moving region, the curved region, the cross-wiring region where the wire harness is cross-wired in the car, and the wiring region to the flat space. In addition there is a case in which the wire harness is continuously wired in regions other than the above-described regions, for example, a rotating region disposed around the axis of the wire harness and the twisted wiring region.
In the moving region of the wire harness, the curved region thereof, the cross-wiring region thereof where the wire harness is cross-wired in the car, and the wiring region to the flat space, it is advantageous that the wire harness is flat because it is possible to prevent the flat wire harness from interfering with peripheral members.
On the other hand, in regions other than the above-described regions, particularly in the rotating region of the wire harness around the axis of the wire harness and the twisted wiring region thereof, it is advantageous to wire the wire harness not flat but the wire harness composed of the bundled round electric wires sectionally circularly held, because the latter wire harness can be wired easily, is capable of maintaining the durability thereof to a high extent against rotation thereof about its axis and twist and eliminates the need for bending the wire harness unlike a flat harness required to be bent, thus providing a high workability.

Therefore according to the above-described construction, it is possible to easily wire one continuous wire harness to be wired in a car in all wiring regions, save the space of the wiring region, and maintain the durability of the above-described to a high extent.

As the moving region of the wire harness, the curved region thereof, and the cross-wiring region thereof where the wire harness is cross-wired in the car, the gap between the car body and the slide door, the gap between the car body and a side door connected to the car body by means of a hinge, the gap between a roof panel and a back door, and the gap between the car body and a seat are exemplified. As the wiring region to the flat space, wiring regions along a floor panel and the roof panel are listed.
As the rotating region of the wire harness around the axis thereof and the twisted wiring region thereof, the wiring regions extended from a car body-side supporting member and a movable member-side supporting member, which support the wire harness cross-wired between the car body and a movable member such as a door, to the interior of the car body and the movable member are listed.

It is preferable that a sheathing material of the flat part comprises:
a pair of adhesive sheets which cover both surfaces of the bundled round electric wires arranged in parallel to fix the bundled round electric wires by fixing both edges of the adhesive sheets to each other with the adhesive sheets sandwiching the bundled round electric wires therebetween;
a pair of sheets which cover both surfaces of the bundled round electric wires arranged in parallel to fix the bundled round electric wires by fixing areas between the round electric wires adjacently disposed or both edges of the sheets to each other by means of ultrasonic welding or heat welding with the sheets sandwiching the bundled round electric wires therebetween; or
a heat-shrinkable tube capable of holding the round electric wires in a flat configuration by heat-shrinking the heat-shrinkable tube after the round electric wires arranged in parallel are covered with the heat-shrinkable tube.
It is preferable that the sheathing material of the circular part consists of a tape to be wound around a periphery of the group of the electric wires, a heat-unshrinkable tube through which the group of the electric wires is inserted; or a heat-shrinkable tube.

As described above, by using a pair of the adhesive sheets, a pair of sheets to be fixed to each other by means of ultrasonic welding or heat welding or the heat-shrinkable tube as the sheathing material for the flat part, it is possible to impart enough flexibility for curving to the flat part and securely flatly hold the round electric wires arranged in parallel. Further the sheathing material is capable of protecting the round electric wires arranged in parallel from being damaged.

The adhesive sheet, the sheet to welded, and the heat-shrinkable tube are not limited to specific sheets or tubes, provided that sheets or tubes are capable of flatly holding the round electric wires arranged in parallel and imparting a proper degree of flexibility thereto. As the adhesive sheet and the sheet to welded, an adhesive sheet, having a thickness of 0.2 to 0.6mm, in which an adhesive layer is formed on one surface of a sheet made of PET or PE is preferable. It is preferable to use the heat-shrinkable tube having a hot melt layer formed on an inner surface of the body thereof made of polyolefin or the like.

As described above, by using the above-described tape, the heat-unshrinkable tube or the heat-shrinkable tube as the sheathing material for the circular part, it is possible to stably hold the group of the round electric wires sectionally circularly.

It is preferable that the wire harness is cross-wired between a slide door-side supporting member and a car body-side supporting member with the wire harness being supported by both supporting members and curvedly operates according to a movement of the slide door; and
the flat part is disposed in a region corresponding to the cross-wiring region; and a region of the wire harness from a portion thereof continuous with one end of the flat part and supported by the slide door-side supporting member to a portion of the wire harness wired into the slide door and a region of the wire harness from a portion thereof continuous with other end of the flat part and supported by the car body-side supporting member to a portion of the wire harness wired into the car body are set as the circular part.

As described above, a simple construction in which the flat part is disposed in the cross-wiring region between the slide door and the car body prevents the wire harness from hanging without using a sheathing material such as the above-described cable guide having a complicated construction and allows the wire harness to follow the operation of opening and closing the slide door with the flat part being smoothly curved. Therefore it is possible to prevent the wire harness from interfering with peripheral members and maintain the durability of the wire harness to a high extent. Because the flat part having a high linearity smoothly curves at a small radius of curvature, the space of the wiring region can be saved to a higher extent.

As described above, the region of the wire harness from the portion thereof continuous with one end of the flat part and supported by the slide door-side supporting member to the portion of the wire harness wired into the slide door and the region of the wire harness from the portion thereof continuous with the other end of the flat part and supported by the car body-side supporting member to the portion of the wire harness wired into the car body are set as the circular part. Thereby it is possible to easily accomplish flexible three-dimensional wiring including the rotation of the wire harness about its axis, twisted wiring, and the like. Further because it is possible to wire the wire harness in a three-dimensional posture without folding it unlike a flat harness required to be bent, it is possible to maintain the durability of the wire harness to a high extent and save the space of the wiring region.

It is preferable to set a plane portion of the flat part which is cross-wired and curvedly operates as a vertical plane, and it is also preferable that after the circular part continuous with both sides of the flat part is inserted into both supporting members by upwardly bending the circular part, the circular part is bent horizontally to wire the circular part in a three-dimensional posture.

As described above, the flat part whose plane portion is set as the vertical plane is laterally swingingly curved about the supporting part of the car body-side supporting member and that of the slide door-side supporting member according to the operation of opening and closing the slide door. By providing the supporting part with a rotation mechanism for laterally swinging the flat part to allow the circular part inserted into the supporting part by bending the circular part upward to be rotatable about its axis, it is possible to decrease burden to be imposed on the electric wires by the laterally curving operation of the flat part. That is, the above-described construction is capable of enhancing the durability of the wire harness to a higher extent and facilitates horizontal bending of the circular part upwardly inserted into the supporting part and pulled out of the supporting member. Thereby the circular part can be connected to a connector disposed at a terminal of a wire harness wired inside the car body and a connector disposed at a terminal of a door harness wired inside the slide door.

When the angle range of the swinging curving is not so large, i.e., when the angle range is not more than 90 degrees, by laterally bending the flat part held by the supporting part without providing the supporting part with the rotation mechanism, the flat part can be laterally swingingly curved. To laterally bend the flat part whose plane portion is set as the vertical plane imposes burden on the electric wires to a lower extent than to laterally bend the circular part. Thereby it is possible to maintain the durability of the wire harness to a high extent. The circular part continuous with the flat part is wired in a three-dimensional posture and can be connected to the connector disposed at the terminal of the wire harness wired inside the car body and the connector disposed at the terminal of the door harness wired inside the slide door.

It is preferable to form a smooth inclined surface on the inner surface of the slide door-side supporting member whose diameter decreases in a sectionally vertical direction and increases in a sectionally horizontal direction so that the configuration of the wire harness can be smoothly shifted from the sectionally vertically long and flat configuration of the flat part thereof to the sectionally circular configuration of the circular part thereof without imposing a large burden to the electric wires.

It is preferable to sheath the flat part with a sheathing protection tube to protect the exterior of the flat part to a high extent and support both ends of the sheathing protection tube with both supporting members. The sheathing protection tube is not limited to a specific one, provided that it has flexibility. For example, it is preferable to use a tube which has a vertically extended flat portion at one side part thereof and a sectionally □-shaped other part continuous with the one side part of the sheathing protection tube constructing a sectionally square through which the flat part is inserted and in which a portion of the other part opposed to the flat portion is set as a corrugated bellows portion having convex portions and concave portions continuous and alternating with each other with the convex portions and concave portions longitudinally being spaced at certain intervals, and the thickness of the flat portion is larger than that of the bellows portion so that the flat part can be securely protected from hanging by gravity.

It is preferable that in a region which is curved by the operation of opening and closing the slide door and necessary to be restricted in a bending angle, a bending restriction rib having a large thickness and a required length is formed on an outer surface of the sheathing protection tube.
According to the above-described construction, it is possible to properly control the bending angle of the wire harness. Therefore it is possible to allow the wire harness to smoothly follow the movement of the slide door and prevent the wire harness from excessively curving and thus prevent the wire harness from interfering with peripheral members. Further by preventing the wire harness from excessively curving to prevent the electric wires from being damaged, it is possible to improve the durability of the wire harness.

### EFFECT OF THE INVENTION

As described above, according to the present invention, the wire harness composed of a plurality of the bundled round electric wires each having the insulation covering layer disposed on the periphery of the core wire is divided into the flat part holding a plurality of the round electric wires arranged in parallel by the sheathing material in a flat configuration and the circular part sectionally circularly holding a plurality of the sectionally circularly bundled round electric wires by the sheathing material with the flat part and the circular part being located in different regions along the longitudinal direction of the wire harness and continuous with each other, wherein the flat part is disposed in any one of regions corresponding to the moving region of the wire harness, the curved region thereof, the cross-wiring region thereof where the wire harness is cross-wired in the car, and the wiring region where the wire harness is wired to the flat space; and the circular part is disposed in the region corresponding to any one of a rotating region around the axis of the wire harness, the twisted wiring region, and other regions except the regions where the flat part is disposed. Therefore it is possible to easily wire one wire harness to be wired in a car in all wiring regions, save the space of the wiring region, and maintain the durability of the above-described to a high extent

As described above, the simple construction in which the flat part is disposed in the cross-wiring region between the slide door and the car body prevents the wire harness from hanging and allows the wire harness to follow the operation of opening and closing the slide door with the flat part being smoothly curved. Therefore it is possible to prevent the wire harness from interfering with peripheral members and maintain the durability of the wire harness to a high extent. Because the flat part having a high linearity smoothly curves at a small radius of curvature, the space of the wiring region can be saved to a higher extent.

As described above, the region of the wire harness from the portion thereof continuous with one end of the flat part and supported by the slide door-side supporting member to the portion of the wire harness wired into the slide door and the region of the wire harness from the portion thereof continuous with the other end of the flat part and supported by the car body-side supporting member to the portion of the wire harness wired into the car body are set as the circular part. Thereby it is possible to easily accomplish flexible three-dimensional wiring including the rotation of the wire harness about its axis, twisted wiring, and the like. Further because it is possible to wire the wire harness in a three-dimensional posture without folding it unlike a flat harness required to be bent, it is possible to maintain the durability of the wire harness to a high extent and save the space of the wiring region.

As described above, by using a pair of the adhesive sheets, the sheet to be welded or the heat-shrinkable tube which can be flatly held as the sheathing material for the flat part, it is possible to impart enough flexibility for curving to the flat part and securely flatly hold the round electric wires arranged in parallel. Further the sheathing material is capable of protecting the round electric wires arranged in parallel from being damaged.
As described above, by using the tape, the heat-unshrinkable tube or the heat-shrinkable tube as the sheathing material for the circular part, it is possible to stably hold the group of the round electric wires sectionally circularly.

### BRIEF DESCRIPTION OF THE DRAWINGS

Fig. 1 shows a wire harness of a first embodiment, in which (A) is a plan view of the wire harness, (B) is a sectional view taken along a line A-A, and (C) is sectional view taken along a line B-B.
Fig. 2 shows a wiring construction (fully closed) of the wire harness of the first embodiment.
Fig. 3 is a schematic perspective view showing a wiring construction of the wire harness at the side of a slide door-side supporting member.
Fig. 4 is a schematic sectional view showing the wiring construction of the wire harness at the side of the slide door-side supporting member.
Fig. 5 is shows enlarged main parts of Fig. 4.
Fig. 6 is a schematic perspective view showing a wiring construction of the wire harness at the side of a car body-side supporting member.
Fig. 7 is a schematic sectional view showing the wiring construction of the wire harness at the side of the car body-side supporting member.
Fig. 8 shows the wiring construction of the wire harness.
Fig. 9 shows a sheathing protection tube, in which (A) is a schematic perspective view as viewed from the side of a flat part and (B) is a schematic perspective view of the sheathing protection tube as viewed from the side of a bellows portion.
Fig. 10 shows a conventional art.
Fig. 11 shows a conventional art.
Fig. 12 shows a conventional art.
Fig. 13 shows a conventional art.

### EXPLANATION OF REFERENCE SYMBOLS AND NUMERALS

- 20:: round electric wire
- 20a:: core wire
- 20b:: insulation covering layer
- 21, 22:: sheathing material
- 23:: flat part
- 24A, 24B:: circular part
- 25:: connector
- 30:: slide door
- 31:: car body
- 31a:: tire house
- 32:: slide door-side supporting member
- 32a:: supporting part
- 32a-1:: tubular portion
- 32a-2:: insertion portion
- 32a-3:: inclined portion
- 32b:: fixing part
- 32b-1:: insertion hole
- 32b-2:: pull-out passage
- 33:: car body-side supporting member
- 33a:: supporting part
- 33b:: pull-out passage
- 33c:: inclined portion
- 40:: sheathing protection tube
- 41:: flat portion
- 41A:: inner flat portion
- 41B:: outer flat portion
- 42:: bellows portion
- 43:: bending restriction rib

### BEST MODE FOR CARRYING OUT THE INVENTION

Embodiments of the present invention is described below with reference to drawings.

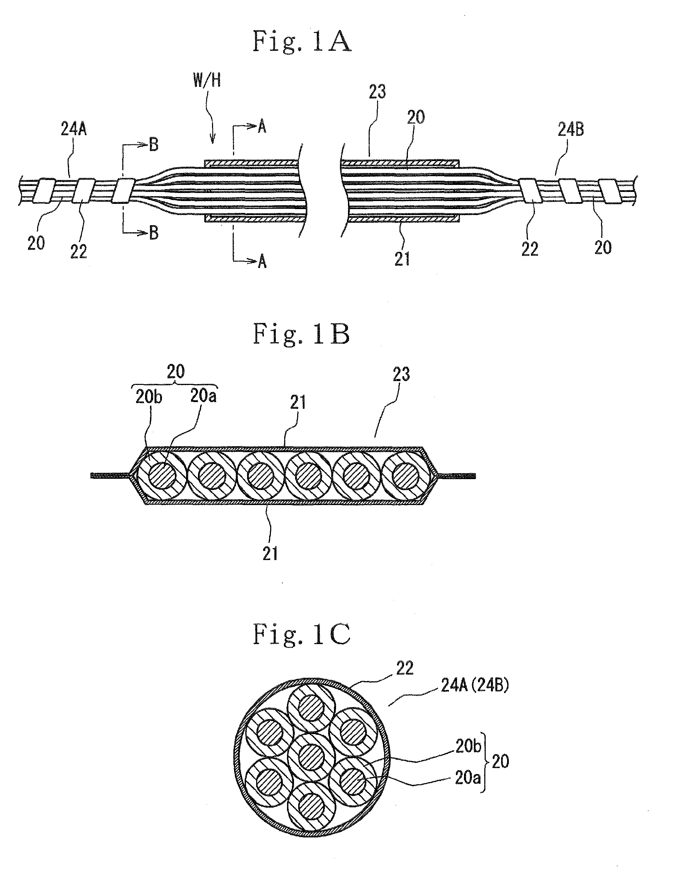

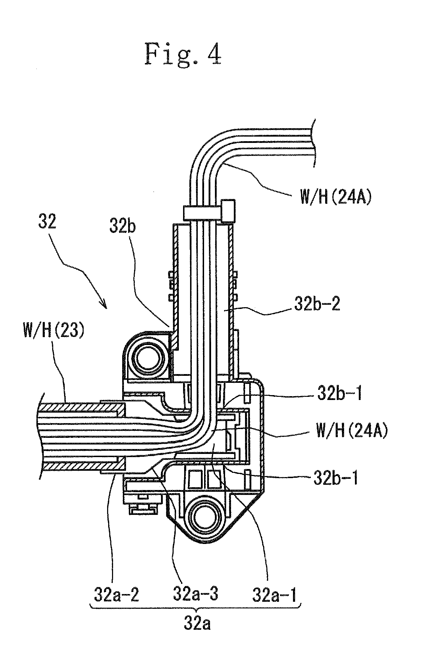

Figs. 1 through 9 show a first embodiment of the present invention. As shown in Fig. 1, a wire harness W/H for a car (hereinafter referred to as wire harness W/H) consisting of a plurality of bundled round electric wires 20 each having an insulation covering layer 20b disposed on the periphery of a core wire 20a is composed of a flat part 23 in which a plurality of the round electric wires 20 arranged in parallel are flatly held with a sheathing material 21, and circular parts 24A, 24B in which a plurality of the round electric wires 20 sectionally circularly bundled are held sectionally circularly with a sheathing material 22. The circular part 24A, the flat part 23, and the circular part 24B are set by dividing the wire harness W/H along the longitudinal direction of the wire harness W/H with the circular parts 24A, 24B continuous with one and other ends of the flat part 23 respectively.

The flat part 23 is formed by using a pair of adhesive sheets as the sheathing material 21 flatly holding the flat part 23, covering both surfaces of the round electric wires 20 arranged in parallel with a pair of the adhesive sheets, and fixing both ends of a pair of the adhesive sheets to each other to fix a group of the electric wires to each other with the adhesive sheets sandwiching the round electric wires 20 therebetween. The adhesive sheet of the first embodiment has an adhesive layer, having a thickness of about 0.3mm, which is formed on one surface of a sheet consisting of PET woven cloth.
As the sheathing material 22 for sectionally circularly holding the circular parts 24A, 24B, a tape to be wound around the surface of the group of the electric wires is used.

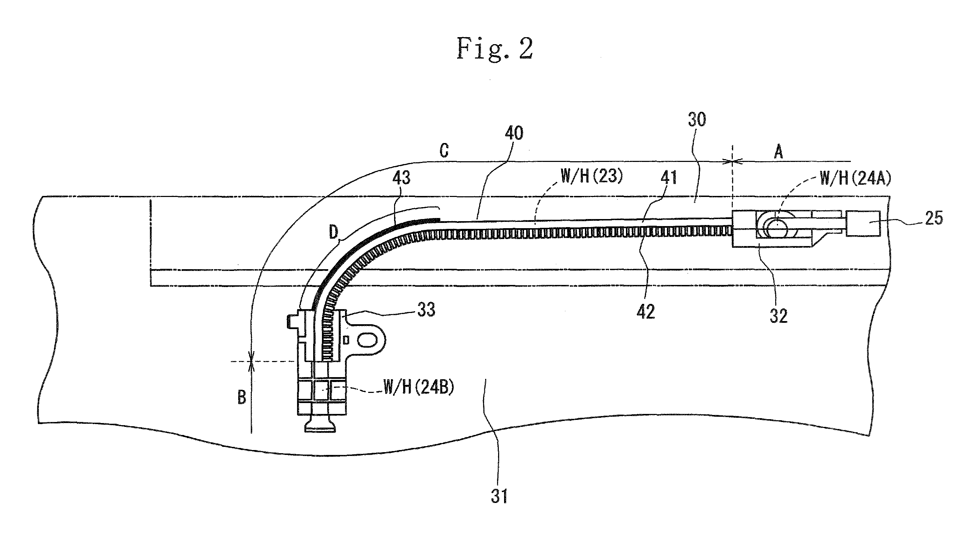

As shown in Figs. 2 through 8, the wire harness W/H having the above-described construction in which the flat part 23 is sheathed with a sheathing protection tube 40 is cross-wired between a slide door 30 and a car body 31 with the wire harness W/H being supported by a slide door-side supporting member 32 and a car body-side supporting member 33. The circular part 24A of the wire harness W/H is disposed in a region A in which the circular part 24A is wired from a supporting part 32a of the slide door-side supporting member 32 into the slide door 30, whereas the circular part 24B of the wire harness W/H is disposed in a region B in which the circular part 24B is wired from a supporting part 33a of the car body-side supporting member 33 into the car body 31. The flat part 23 is disposed in a cross-wiring portion (region C) disposed between the region A and the region B by setting a plane portion as a vertical plane.

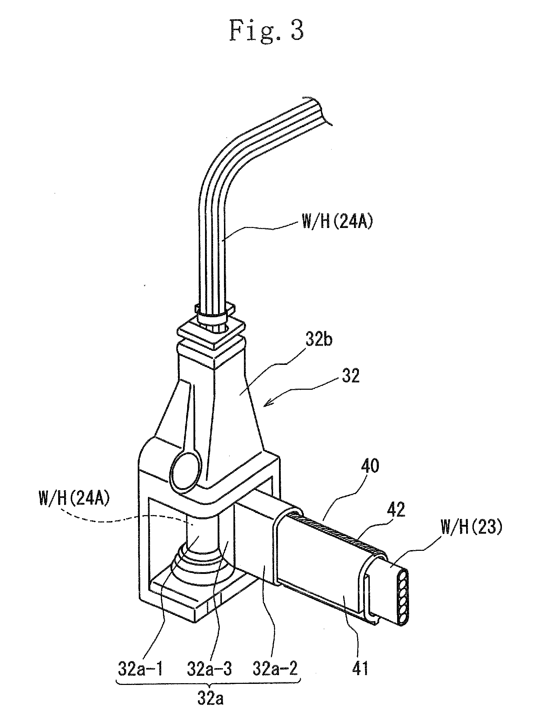

Specifically as shown in Figs. 3 through 5, the slide door-side supporting member 32 is constructed of the supporting part 32a and the fixing part 32b fixed to the slide door 30. The supporting part 32a is provided with a tubular portion 32a-1 vertically projected. By inserting the tubular portion 32a-1 into a vertically extended insertion hole 32b-1 formed through the fixing part 32b to support the tubular portion 32a-1 by the insertion hole 32b-1, the supporting part 32a is laterally rotatable. The circular part 24A continuous with the flat part 23 inserted into an insertion portion 32a-2 of the supporting part 32a is inserted into the rotatable tubular portion 32a-1 by bending the circular part 24A upwardly or vertically. In laterally swingingly curving a portion of the flat part 23 disposed at the side of the slide door 30 according to an operation of opening and closing the slide door 30, the vertically extended circular part 24A inserted through the tubular portion 32a-1 smoothly rotates about its axis owing to a lateral rotation of the supporting part 32a. Thus it is possible to apply a burden to the electric wires by the above-described curving operation.

To shift the configuration of the wire harness W/H from the sectionally vertically long and flat configuration of the flat part 23 thereof to the sectionally circular configuration of the circular part 24A thereof without imposing a large burden to the electric wires, the supporting part 32a of the slide door-side supporting member 32 is provided with a smooth inclined portion 32a-3, disposed between the insertion portion 32a-2 and the tubular portion 32a-1, whose diameter decreases in a sectionally vertical direction and increases in a sectionally horizontal direction.

The circular part 24A upwardly inserted into the tubular portion 32a-1 of the supporting part 32a is formed in a three-dimensional posture by pulling out the circular part 24A to the outside of the slide door-side supporting member 32 via a pull-out passage 32b-2 disposed at the side of the fixing part 32b and bending the circular part 24A horizontally to connect a connector 25 mounted at the terminal of the circular part 24A to a connector of a door harness (not shown) wired inside the slide door 30.

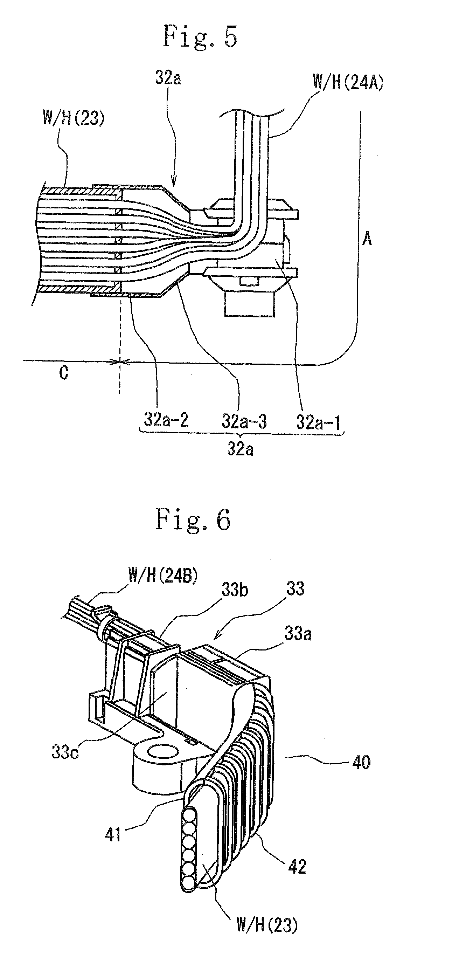

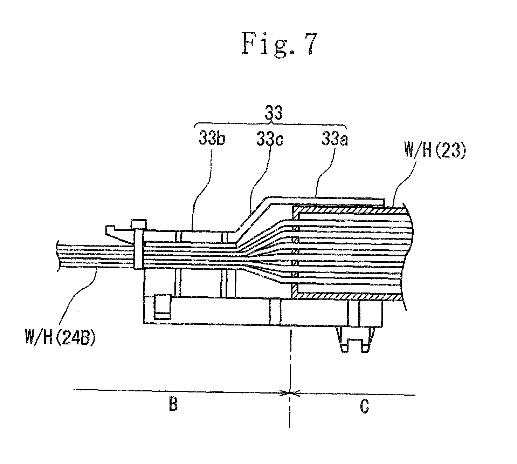

The car body-side supporting member 33 in which the angle range of the swinging of the flat part 33 is not so large is not provided with a rotation mechanism. As shown in Figs. 6 and 7, the flat part 23 is inserted into the supporting part 33a and held thereby without providing the supporting part 33a with the rotating mechanism. In this state, the circular part 24B continuous with the flat part 23 is pulled out to the outside of the car body-side supporting member 33 via a pull-out passage 33b. By laterally bending the flat part 23 held by the supporting part 33a, the flat part 23 is laterally swingingly curved without imposing a large burden on the electric wires.
The circular part 24B pulled out to the outside of the car body-side supporting member 33 is wired in a three-dimensional posture to connect a connector (not shown) mounted on the terminal of the circular part 24B to a connector disposed at the terminal of a wire harness wired inside the car body 31.

To shift the configuration of the wire harness W/H from the sectionally vertically long and flat configuration of the flat part 23 thereof to the sectionally circular configuration of the circular part 24B thereof without imposing a large burden to the electric wires, the car body-side supporting member 33 is also provided with a smooth inclined portion 33c, disposed between the supporting part 33a and the pull-out passage 33b, whose diameter decreases in a sectionally vertical direction and increases in a sectionally horizontal direction.

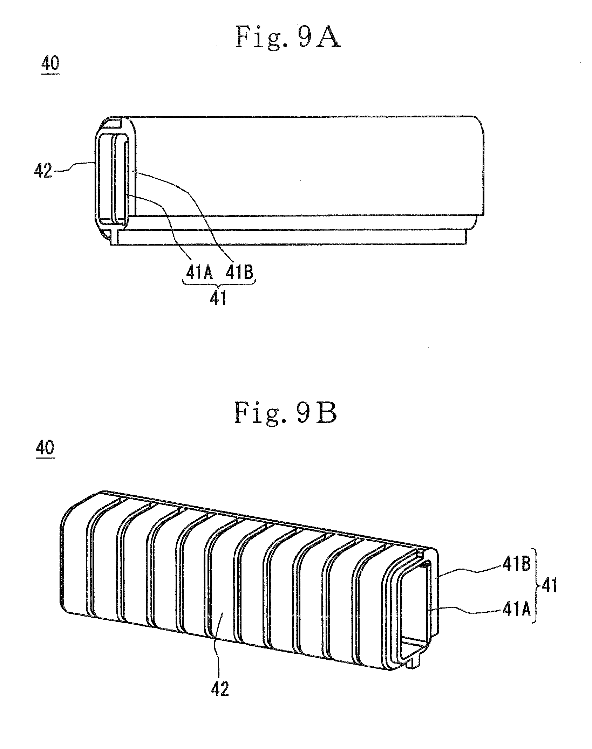

The sheathing protection tube 40 sheathing the flat part 23 is formed by molding EPDM. As shown in Fig. 9, one side part of the sheathing protection tube 40 extended vertically is set as a flat portion 41. There is formed sectionally ⊐-shaped other part continuous with the one side part of the sheathing protection tube 40 and constructing a sectionally square through which the flat part 23 is inserted. The entire other part is set as a corrugated bellows portion 42 having convex portions and concave portions continuous and alternating with each other with the convex portions and concave portions longitudinally being spaced at certain intervals. The flat portion 41 thicker than the bellows portion 42 is composed of an inner flat portion 41A and an outer flat portion 41B dividedly formed and layered one on the other. A lower end of the inner flat portion 41A is continuous with a bottom side of the bellows portion 42, and an upper end of the outer flat portion 41B is continuous with an upper side of the bellows portion 42. In this construction, the flat portion 41 can be freely opened and closed over the longitudinal entire length of the flat portion 41 so that the flat part 23 can be inserted into the sheathing protection tube 40 from the side surface thereof.

In wiring the wire harness W/H in which the flat part 23 is sheathed with the sheathing protection tube 40 between the slide door 30 and the car body 31, with the flat portion 41 of the sheathing protection tube 40 positioned at a vertical portion disposed at the outer side of the car body and the bellows portion 42 positioned at the inner side of the car body when the slide door 30 is closed fully (P3), one end of the sheathing protection tube 40 is fixedly fitted in the slide door-side supporting member 32, and the other end thereof is fixedly fitted in the car body-side supporting member 33.
A bending restriction rib 43, made of EPDM, which has a thickness of 5mm is formed in a region D, of the flat portion 41 of the sheathing protection tube 40, which is disposed near a fixed end of the car body-side supporting member 33.

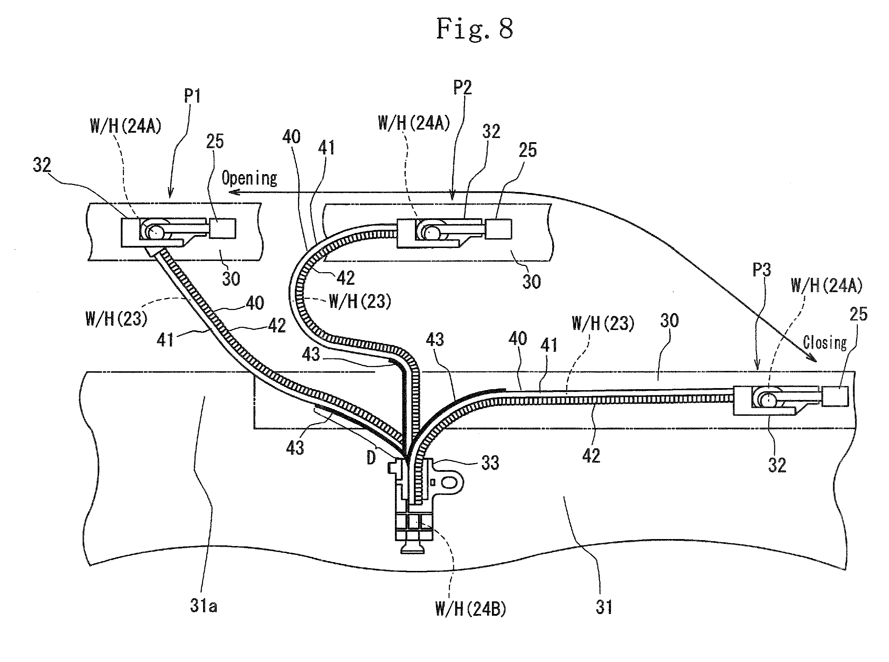

P1 of Fig. 8 shows a state where the slide door 30 is fully opened. P3 of Fig. 8 shows a state where the slide door 30 is fully closed. P2 of Fig. 8 shows a state where the slide door 30 is in a half-open state which is a stage intermediate between the fully open state and the fully closed state. The wire harness W/H whose flat part 23 is sheathed with the sheathing protection tube 40 follows the operation of opening and closing the slide door 30 with the wire harness W/H smoothly curving.

As described above, by longitudinally dividing the wire harness W/H composed of a plurality of the bundled round electric wires 20 each having the core wire 20a and the insulation covering layer 20b disposed on the periphery thereof into the flat part 23 holding a plurality of the round electric wires 20 arranged in parallel by the sheathing material 21 and the circular parts 24A, 24B sectionally circularly holding a plurality of the round electric wires 20 bundled sectionally circularly by the sheathing material 22, disposing the flat part 23 in the cross-wiring region (region C) positioned between the slide door 30 and the car body 31, and disposing the circular part 24A in the region A, which is the region other than the flat part 23, where the circular part 24A is wired from the supporting part 32a of the slide door-side supporting member 32 into the slide door 30 and disposing the circular part 24B in the region B, which is the region other than the flat part 23, where the circular part 24B is wired from the supporting part 33a of the car body-side supporting member 33 into the car body 31, it is possible to facilitate the wiring of the wire harness W/H in all of the regions where one wire harness W/H is to be wired, save the wiring space, and maintain the durability of the wire harness W/H to a high extent.

More specifically as described above, a simple construction in which the flat part 23 is disposed in the cross-wiring region (region C) between the slide door 30 and the car body 31 prevents the wire harness W/H from hanging and allows the wire harness W/H to follow the operation of opening and closing the slide door 30 with the flat part 23 being smoothly curved. Therefore it is possible to prevent the wire harness W/H from interfering with peripheral members and maintain the durability of the wire harness W/H to a high extent. Because the flat part 23 having a high linearity smoothly curves at a small radius of curvature, the space of the wiring region can be saved to a higher extent.

As described above, by setting the region A, continuous with one end of the flat part 23, where the circular part 24A is wired from the supporting part 32a of the slide door-side supporting member 32 into the slide door 30 and the region B, continuous with the other end of the flat part 23, where the circular part 24B is wired from the supporting part 33a of the car body-side supporting member 33 into the car body 31 as the circular part 24A and the circular part 24B, it is possible to easily accomplish flexible three-dimensional wiring including the rotation of the wire harness W/H about its axis, twisted wiring, and the like. Further because it is possible to wire the wire harness W/H in a three-dimensional posture without bending it unlike a flat harness required to be bent, it is possible to maintain the durability of the wire harness W/H to a high extent and save the wiring space.

In addition, as described above, by using a pair of the adhesive sheets as the sheathing material 21 holding the flat part 23 flatly, it is possible to impart enough flexibility for curving to the flat part 23 and securely flatly hold the round electric wires 20 arranged in parallel. Further the sheathing material 21 is capable of protecting the round electric wires 20 arranged in parallel from being damaged.

Further as described above, by protecting the flat part 23 with the sheathing protection tube 40 which has the vertically extended flat portion 41 at one side part thereof and the sectionally ⊐-shaped other part continuous with the one side part of the sheathing protection tube 40 and constructing the sectionally square through which the flat part 23 is inserted and in which the other part is set as the corrugated bellows portion 42, and the flat portion 41 is set thicker than the bellows portion 42, the flat part 23 can be prevented from hanging by gravity, securely protected, and is capable of smoothly following the operation of opening and closing the slide door 30.

Furthermore as described above, the flat portion 41 of the sheathing protection tube 40 disposed in the region D where it is necessary to restrict the bending angle is provided with the bending restriction rib 43 having a large thickness. Thereby by properly restricting the bending angle of the wire harness W/H, it is possible to securely prevent the wire harness W/H and a tire house 31a from interfering with each other. Further the electric wire 20 is prevented from being damaged because the electric wire 20 is prevented from being excessively curved. Thereby the durability of the wire harness W/H can be improved.

The second embodiment is similar to the first embodiment except that the car body-side supporting member 33 is also provided with a rotation mechanism similar to that provided on the slide door-side supporting member 32 and that the sheathing protection tube 40 is not provided with the bending restriction rib 43.

Similarly to the first embodiment, in the second embodiment, in all of wiring regions where one wire harness W/H is wired, it is possible to wire the wire harness W/H easily, save the space of the wiring region, and maintain the durability of the wire harness W/H to a high extent.
In the second embodiment, because the car body-side supporting member 33 is also provided with the rotation mechanism, the flat part 23 is capable of smoothly following the operation of opening and closing the slide door 30. Thus although the sheathing protection tube 40 is not provided with the bending restriction rib, it is possible to prevent the wire harness W/H from interfering with a tire house 31a.

The present invention is not limited to the first and second embodiments, but as the sheathing material of the flat part, it is possible to use a pair of sheets which cover both surfaces of the bundled round electric wires arranged in parallel and fix the bundled round electric wires to each other by fixing both edges of the sheets to each other or the round electric wires adjacently disposed to each other by means of ultrasonic welding or heat welding with the sheets sandwiching the bundled round electric wires therebetween.

## Claims

1. A wire harness for a car composed of a plurality of bundled round electric wires each having an insulation covering layer disposed on a periphery of a core wire,
said wire harness comprising:
a flat part holding a plurality of said round electric wires arranged in parallel by a sheathing material in a flat configuration; and
a circular part sectionally circularly holding a plurality of said sectionally circularly bundled round electric wires by a sheathing material with said flat part and said circular part being located in different regions along a longitudinal direction of said wire harness and continuous with each other,
wherein in wiring said wire harness in said car, said flat part is disposed in any one of regions corresponding to a moving region of said wire harness, a curved region thereof, a cross-wiring region thereof where said wire harness is cross-wired in said car, and a wiring region where said wire harness is wired to a flat space; and
in wiring said wire harness in said car, said circular part is disposed in a region corresponding to any one of a rotating region around an axis of said wire harness, a twisted wiring region, and other regions except
said regions where said flat part is disposed.

2. The wire harness for a car according to claim 1, wherein said sheathing material of said flat part comprises:
a pair of adhesive sheets which cover both surfaces of said bundled round electric wires arranged in parallel to fix said bundled round electric wires by fixing both edges of said adhesive sheets to each other with said adhesive sheets sandwiching said bundled round electric wires therebetween;
a pair of sheets which cover both surfaces of said bundled round electric wires arranged in parallel to fix said bundled round electric wires by fixing areas between said round electric wires adjacently disposed or both edges of said sheets to each other by means of ultrasonic welding or heat welding with said sheets sandwiching said bundled round electric wires therebetween; or
a heat-shrinkable tube capable of holding said round electric wires in a flat configuration by heat-shrinking said heat-shrinkable tube after said round electric wires arranged in parallel are covered with said heat-shrinkable tube; and
said sheathing material of said circular part consists of a tape to be wound around a periphery of said group of said electric wires;
a heat-unshrinkable tube through which said group of said electric wires is inserted; or
a heat-shrinkable tube.

3. The wire harness for a car according to claim 1 or 2, wherein said wire harness is cross-wired between a slide door-side supporting member and a car body-side supporting member with said wire harness being supported by said both supporting members and curvedly operates according to a movement of said slide door; and
said flat part is disposed in a region corresponding to said cross-wiring region; and a region of said wire harness from a portion thereof continuous with one end of said flat part and supported by said slide door-side supporting member to a portion of said wire harness wired into said slide door and a region of said wire harness from a portion thereof continuous with other end of said flat part and supported by said car body-side supporting member to a portion of said wire harness wired into said car body are set as said circular part.

4. The wire harness for a car according to claim 3, wherein a plane portion of said flat part which is cross-wired and curvedly operates is set as a vertical plane, and after said circular part continuous with both sides of said flat part is inserted into said both supporting members by upwardly bending said circular part, said circular part is bent horizontally to wire said circular part in a three-dimensional posture.

5. The wire harness for a car according to claim 3 or 4, wherein said flat part is sheathed with a sheathing protection tube.

6. The wire harness for a car according to claim 5, wherein in a region which is curved by an operation of opening and closing said slide door and necessary to be restricted in a bending angle, a bending restriction rib having a large thickness and a required length is formed on an outer surface of said sheathing protection tube.
